# EUROPEAN PATENT SPECIFICATION

(11) **EP 1 436 923 B1**
(45) Date of publication and mention of the grant of the patent: **21.12.2005**
(21) Application number: 02767007.4
(22) Date of filing: 09.10.2002
(51) Int. Cl.: H04J 3/06, H04J 3/07, H04J 3/16

(54) **METHOD AND APPARATUS FOR DIGITAL DATA SYNCHRONIZATION**
VERFAHREN UND VORRICHTUNG ZUR SYNCHRONISIERUNG DIGITALER DATEN
PROCEDE ET APPAREIL DE SYNCHRONISATION DE DONNEES NUMERIQUES

(30) Priority: 09.10.2001 US 972686
(43) Date of publication of application: 14.07.2004
(73) Proprietor: Nortel Networks Limited, St.Laurent, Quebec H4S 2A9 (CA)
(72) Inventor: ROBERTS, Kim, B., Ottawa, Ontario K2R 1C6 (CA); GAGNON, Ronald, J., Ottawa, Ontario K2H 9R9 (CA); SHIELDS, James, A., Ottawa, Ontario K2H 9A1 (CA)
(74) Representative: Boyce, Conor
(86) International application number: PCT/CA2002/001515
(87) International publication number: WO 2003/032540

(56) References cited:
- EP-A- 0 248 551
- EP-A- 1 067 722
- WO-A-96/39762
- LAU R C ET AL: "SYNCHRONOUS TECHNIQUES FOR TIMING RECOVERY IN BISDN" IEEE TRANSACTIONS ON COMMUNICATIONS, IEEE INC. NEW YORK, US, vol. 43, no. 2/4, PART 3, 1 February 1995 (1995-02-01), pages 1810-1818, XP000505653 ISSN: 0090-6778
- DUTTWEILER D L: "WAITING TIME JITTER" BELL SYSTEM TECHNICAL JOURNAL, AMERICAN TELEPHONE AND TELEGRAPH CO. NEW YORK, US, vol. 51, no. 1, January 1972 (1972-01), pages 165-207, XP000798920 cited in the application
- MULVEY M ET AL: "TIMING ISSUES OF CONSTANT BIT RATE SERVICES OVER ATM" BT TECHNOLOGY JOURNAL, BT LABORATORIES, GB, vol. 13, no. 3, 1 July 1995 (1995-07-01), pages 35-45, XP000543496 ISSN: 1358-3948
- NAWROCKI R ET AL: "WAITING TIME JITTER REDUCTION BY FILL LOCKING" ELECTRONICS LETTERS, IEE STEVENAGE, GB, vol. 26, no. 16, 2 August 1990 (1990-08-02), pages 1227-1228, XP000108212 ISSN: 0013-5194

## Description

### Background of the Invention

Optical communications networks predominantly follow the Synchronous Optical Network (SONET)/Synchronous Digital Hierarchy (SDH) synchronous standard for optical transport, with the SONET standard in North America and SDH elsewhere. For the purpose of this specification, while reference will be made to SONET, it will be readily appreciated that the disclosure herein is readily adaptable to the SDH standard.

The SONET standard defines rates, interfaces and formats, network operation, and network features, and the like, for high speed, high bandwidth transport of optical signals. SONET synchronously multiplexes signals which provides the advantage of single-step -multiplexing and of cross-connect and add-drop capability. Further, sync characters and message framing for clock synchronization between network equipment is unnecessary as SONET relies on a synchronization network to transport timing reference between locations.

The base format of SONET is the synchronous transport signal level 1 (STS-1). The STS-1 frame has two main areas, transport overhead and synchronous payload envelope (SPE). The SPE is divided into two parts: the STS path overhead and the payload. The STS-1 frame is a fixed size of 810 bytes (6480 bits) and a frame length of 125 microseconds, or 8000 frames per second, with a line rate of 51.84 Mbps. STS-n signals are higher level signals formed by byte interleaving n STS-1 signals, where n is an integer. STS-1 signals may also be concatenated with a number of STS-1 signals forming an STS-nc signal, which will be multiplexed, switched and transported through the network as a single entity. An STS-3c has a single payload but is at a frame rate of 155.52 Mbps.

Incoming signals that comply with this standard are readily transported over SONET networks. Incoming data is mapped into the SPE. The data may start anywhere in the SPE due to asynchronous arrival of data from different systems. A pointer mechanism (H1 and H2 pointer bytes in the line overhead) is used in SONET to indicate the starting address of the data in the SPE, thereby aligning and synchronizing frame to the SONET network. The pointer mechanism also allows straightforward connection from one network to another, until the incoming signal is delivered to the far end.

Incoming signals that do not comply with the SONET standard need specific synchronization in order to be carried in a SONET network. For example, incoming signals may be asynchronous, being of lower or higher in rate, than the local frequency.

Mapping of one rate or format into another rate or format is known. For example, Bellcore TR-0253 describes the standard mapping into SONET of some common asynchronous lower rate transmission formats such as DS1, DS2 and DS3, and the like. Similarly, standard mappings are also available for other electrical signals as E1. Generally, format specific hardware is required to map such specific sets of signals.

Most optical signal formats do not have such standard mappings into SONET. In fact, even a SONET signal itself can become a non-compliant incoming signal where, rather than the standard of passing of only the SPE, some or all of the overhead bits are passed as well.

The document, titled "Synchronous Techniques For Timing Recovery In BISDN" by R.C. Lau et al and published in "IEEE Transactions on Communications" (IEEE Inc., New York, US, vol. 43, no.2/4, Part 3, 1 February 1995 (1995-02-01)) discloses a method of synchronising a data signal for transport across a synchronous communications network. The method comprises calculating a timing estimate that is indicative of the relationship between a data rate on one hand, and a reference frequency on the other.

International Patent WO-9639762 (Symmetricom Inc, 12 December 1996 (1996-12-12)) discloses a method for mapping a data stream with data rate F1 to a synchronous signal with data rate F2, by means of buffering data at the sending and receiving entities, and by using stuffing to compensate for the frequency difference.

Copending European Patent Application Number EP1067722, published January 10, 2001 and titled "Mapping Arbitrary Signals Into SONET", Roberts, et al., and copending Application Number 09/438,516, titled "Detection of Previous Section Fail for a Transparent Tributary", describe methods and systems of universally mapping incoming signals having a continuous format into SONET frames that can then be carried by a SONET network, thereby allowing any qualified format to be transparently transported. In these applications, incoming signals, even those varying significantly from the standard are uniformly mapped into SONET. However, it does not mitigate problems associated with waiting time jitter.

Jitter and wander are important system parameters and address transparency of data with respect to timing. Phase variations between 10 Hz and 100 MHz are referred to as jitter. Jitter above the clock recovery bandwidth reduces system margin. Wander is phase variation below 10 Hz. SONET/SDH signals that carry timing reference have strict wander requirements. Jitter and wander are measured after data is desynchronized and recovered.

Waiting time jitter is a low-frequency phase jitter introduced whenever asynchronous digital signals are synchronized for multiplexing by stuffing. Stuffing techniques are commonly employed in the mapping process to rate adapt asynchronous signals to produce data signals of the appropriate SONET frequency prior to multiplexing, and thereby account for timing differences. A detailed discussion on the subject of waiting time jitter is contained in D. Duttweiler, *Waiting Time Jitter,* BELL SYS. TECH.. J., vol 51, pp. 165-207, January 1972. In this article, Duttweiler demonstrates that waiting time jitter is the result of imperfect sampling of the phase of incoming data to the synchronizer. At the desynchronizer, the reference clock of the incoming data is being recovered based on the imperfect phase samples.

Imperfect phase sampling is due to limited resolution in the expression of analog phase information with digital words, which is expressed as a stuff bit or stuff word. It is also due to limited resolution in time where there is one stuff opportunity at discrete times in the mapping domain.

Stuffing occurs at a synchronizer. Traditionally, data bits from incoming asynchronous signals are written into an elastic store (also referred to as an elastic buffer or FIFO) of the synchronizer for temporary storage, under the influence of a write clock derived from the incoming data of the respective asynchronous signals. A read clock is derived from a local clock, local to the synchronizer and synchronous with SONET, which determines the rate at which data bits are read out (outputted) from the elastic store. Where the write clock is not precisely synchronous with the read clock, overflow or underflow may occur in the elastic store resulting in a discontinuity, or "slip", in the output data signal destined for multiplexing. Usually, the read clock rate is higher than the write clock rate with the consequence that the elastic store will be emptied.

The fill of the elastic store is constantly monitored and compared to a threshold by a phase comparator, the output being the phase difference between the write and read clocks. Where the fill is below the threshold level, the phase comparator and associated circuitry operate to inhibit the read clock and a stuff bit is inserted to the output signal. The resulting read clock is a gapped clock, with an irregular signal containing pulses separated by regularly occurring gaps for control bits and irregular occurring gaps for stuff bits. At the same time, the input data bits continue filling the elastic store. The output signal, following synchronization to the local rate by stuffing, is then mapped into SONET frames, which will then be subsequently multiplexed with other signals to form higher rate signals. Information regarding stuffing and stuff bit location is transmitted with each frame.

Waiting time jitter is a strong function of "stuff ratio", which is the ration of stuff opportunities used to the total number of stuff opportunities available. Stuff ratios close to fractions with small denominators, for example, 1/1, 1/2, 1/3, and the like, exhibit the worst jitter. This is because these stuff ratios result in changes in stuff opportunities that vary periodically over a long timescale, which results in a recovered clock signal with a low frequency content that is very difficult to filter out by a phase locked loop at the desynchronizer.

Generally, each stuff bit is identified in a frame by three stuff indicators for redundancy. This in turn affects the maximum amount of payload that can be carried in a frame, which in turn affects available bandwidth in the signal. Maximum convenient speed for running CMOS circuits is typically 150 Mb/s Further, bit stuffing is complicated in parallel implementations in complementary metal oxide semiconductors (CMOS), which is a presently employed technology used to implement digital circuits at reasonable speeds. This would limit bit stuffing to client rates up to 150 Mb/s.

Where the fill rate is higher than the output data rate, negative stuffing occurs, and extra data is transmitted through another channel.

Instead of bit stuffing, word stuffing may be employed. A word is a string of data units that is handled as a unit. The word size may be, for example, of 8 times n bits with n being the number of bytes in the word, with the result that, for example, 24 bits are stuffed at a time. Word stuffing is designed to be used in parallel track.

The delay in time between attaining the threshold level and the stuffing function produces low frequency jitter and wander in the output of the phase comparator. Waiting time jitter is a strong function of the stuff ratio. Waiting time jitter may have low frequency content close to 0 Hz, especially at low stuff ratios. Low frequency content is difficult to filter out at the desynchronizer.

More particularly, a phase locked loop with a low pass filter may be employed to filter out low frequency jitter. However, this requires a correspondingly larger elastic store to absorb jitter and wander. This is inefficient and results in greater delays.

Further, where word stuffing is employed, the waiting time jitter problem is substantially magnified, growing with about the cube of the word size, as the amplitude of the phase transient is proportional to the word size, the error due to rounding of the analog phase to digital information is proportional to the word size, and the spectral location of waiting time jitter is inversely proportional to the word size.

U.S. patent no. 4,811,340 issued on March 7, 1989 to McEachern et al. discloses a method of threshold modulation that changes the spectral location of waiting time jitter. More particularly, the low frequency jitter is changed to a higher frequency that is easily removed by a conventional PLL circuit at the desynchronizer. This technique reduces the amount of waiting time jitter for specific incoming signals but not to sufficiently acceptable levels, for example, for high speed applications.

Asynchronous Transfer Mode (ATM) is a standard that is asynchronous in nature. However, the transport of voice requires that the data be synchronized so as to maintain the temporal relationship between a speaker and listener. In simple point to point applications, two end points may be synchronized by two standard mechanisms: adaptive clocking or synchronous residual time stamping (SRTS). These mechanisms adjust the clock rate at one end of the circuit based on the clock rate of the other end. The adaptive clock adjusts clock rate by monitoring the depth of the SAR receive buffers. It these adjusts the clock rate of the "slave" end to maintain an appropriate buffer depth. On the other hand, SRTS monitors the rate of the line clock at the "master" end of the circuit, with reference to a standard clock. The difference between the two clocks is then encoded and transmitted as part of the data stream. At the slave end, this "difference" signal is retrieved and used to adjust the slave clock by reference to the difference signal and the standard clock.

In this manner, the ATM standard for transporting and time stamping bit-streams explicitly communicates the frequency of a data signal. However, it assumes that the far end reference frequency exactly matches the head end reference frequency. This is generally not the case. As signals frequently cross asynchronous boundaries, temporary failures of the exact network synchronizations occur. That method suffers from excessive wander or failures in these cases.

There remains a need for a universally applicable low jitter method of synchronizing and desynchronizing asynchronous signals for transport on a synchronous network.

### Brief Summary of the Invention

The present invention seeks to provide a synchronizer and desynchronizer, system and method, which minimize the above problems.

According to one aspect of the invention, there is provided a synchronizing element and method of synchronization in a system for transporting a data signal of bit rate f₁ in a data stream of bit rate f₂, where the ratio of f₁ and f₂ is variable. The synchronizing element determines the bit rate f₁ of an incoming data signal and the bit rate f₂ of the data stream to which the incoming data is to be rate-adapted. A relationship is then determined between two bit rates f₁, and f₂. The relationship is expressed as a value of significant resolution, which may be communicated with the data signal.

In an embodiment, the relationship is based on the phase of the data signal and the data stream, and expressed in the form of a digital multibit value. The multibit value may also represent an average fraction of a data clock that is ungapped and the average fraction of a read clock that is ungapped.

The relationship between f₁ and f₂ may be determined within a circuit analogous to a digital phase-locked loop. A detailed phase comparator may be provided for determining phase of the incoming data signal to a fine resolution over a specified time interval.

A multibit value so-determined for an internal of a data signal may be communicated with a corresponding block of data which will be mapped into a synchronous data stream. The multibit value may also be combined with a stuff indicator to be used in mapping function. In another embodiment, the determination of the relationship is decoupled from the level of fill of data store, including a data store where the data output is gapped so as to produce word stuffing.

In another aspect, there is also provided a desynchronizing element and method of desynchronization for reconstructing a data signal of bit rate f₁ from a data stream of bit-rate f₂, the data signal having been transported in the data stream, the ratio of f₁ and f₂ being variable. The desynchronizing element has a phase transfer function that has a substantially broad bandwidth. In an embodiment, the desynchronizing element has a voltage controlled oscillator and a phase-locked loop. The VCO suppress phase noise from the phase-locked loop and the phase-locked loop significantly mitigates jitter. The PLL may have a loop control bandwidth greater than 1 kHz or 100 kHz in some embodiments.

Phase error determination and correction occurs in the desynchronizer. In an embodiment, the data store exists in parallel, separate from the phase error determination and correction function. The output from the data store is gapped so as to produce word stuffing Multibit values previously communicated with a corresponding block of data may be used to derive the bit rate f₁.

Advantageously, a transparent and universal method of rate-adapting asynchronous signals into synchronous signals is provided which minimizes waiting-time jitter.

### Brief Description of the Drawings

Other aspects and features of the present invention will become apparent to those ordinarily skilled in the art upon review of the following description of specific embodiments of the invention in conjunction with the accompanying figures in which:
**Figure 1** depicts a communications network.
**Figure 2** depicts a transparent synchronizer in accordance with an embodiment of the invention.
**Figure 3** depicts a synchronizer circuit of Figure 2.
**Figure 4** depicts a digital synchronizer PLL of Figure 3.
**Figure 5a** depicts a graph representing the actual phase of a data signal over time, overlaid with phase estimates of the data signal, in accordance with an embodiment of the invention.
**Figure 5b** depicts the graph of Figure 5a where phase estimates are taken at fixed clock intervals synchronous to a local clock
**Figure 5c** depicts one phase estimate over one sampling interval in detail..
**Figure 6** depicts a transparent desynchronizer in accordance with an embodiment of the invention.
**Figure 7** depicts a desynchronizer circuit of Figure 6.
**Figure 8** depicts a desynchronizer PLL of Figure 7.

Like numerals denote like features in the drawings to facilitate an understanding the invention.

### Detailed Description of the Invention

This invention relates to transparent ports, which are data terminals, which map (in the case of synchronizers), or reverse maps (in the case of desynchronizers), data of arbitrary rates into, or from, synchronous frames such as SONET or SDH frames.

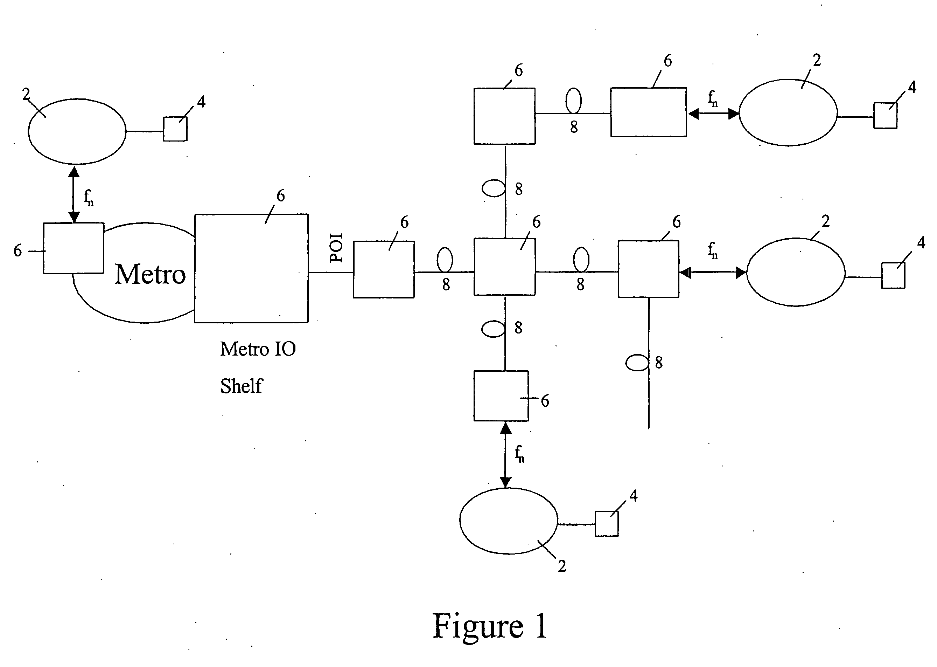

By way of background, as summarized in Figure 1, a plurality of services are transparently transported over a synchronous network such as SONET. Continuous format digital data signals are generated by local users 2, such as terminals or access networks, and driven by (timed to) a local reference clock 4. Each signal has a bit rate fₙ, which is ameasure of the rate of digital transitions in the signals, and has a particular format associated with it. As such, bit rates may vary from data signal to data signal.

The digital signals are transmitted to a plurality of terminals 6 in a synchronous network, the terminals are each provided with one or more synchronizers and/or desynchronizers (not shown). The terminals 6 may be backplane digital cross-connects or digital switches, and the like, and are junctions where data signals are received and retransmitted.

At terminals 6 provided with synchronizers, data bits from a number of signals are received by a received and recovered, mapped by a number of synchronizers into envelopes of a synchronous signal, such as STS-1, multiplexed in a multiplexer with other synchronous signals into a high rate signal and launched by a transmitter over a synchronous optical network 8 to an appropriate site.

The size of the frame is selected in software for satisfactory bandwidth utilization for desired purposes. Similarly, the higher level signals into which lower level transport signals are multiplexed, and as the case may be, concatenated, for example, STS-3nc, is selected for desired purposes, including high speed, high bandwidth transport.

At terminals 6 provided with desynchronizers, optical receivers recover data signals from the high speed synchronous data stream, the demultiplexer separates out the lower rate data signals and presents the data signals to various desynchronizers, which rearranges bits into the respective formats associated with each data signal. The recovered data signals are then launched by transmitters to an associated network, or an associated end user, at the far end.

Within the synchronous system, the average frequency of all clocks in the system is the same or nearly the same, although there may be a degree of phase differences between transitions of signals within specific limits. Each clock can be traced back to a stable primary reference. In a SONET network, a STS-1 signal bears a rate of 51.84 Mb/s, an STS-3 bears a rate of 155.520 Mb/s, while an STS-192 bears a rate of 9953.280 Mb/s. This synchronicity enables the stacking of multiple synchronous signals without bit stuffing.

A terminal 6 has an internal clock that is derived from and is synchronized to a building integrated timing supply (BITS), the clock being traceable to a primary reference clock (PRC), and accordingly is referenced to a synchronous rate. The terminal provides timing on its outgoing OC-N signal. The internal clocks of other nodes are timed by the incoming signal.

Reference clocks driving data signals from users are generally asynchronous to the reference clocks of the synchronous network. Indeed, generally in multipoint services, signals may cross a number of asynchronous boundaries, from one network to another, before it reaches the far end. These signals are required to be appropriately synchronized in order to be transported in the synchronous network.

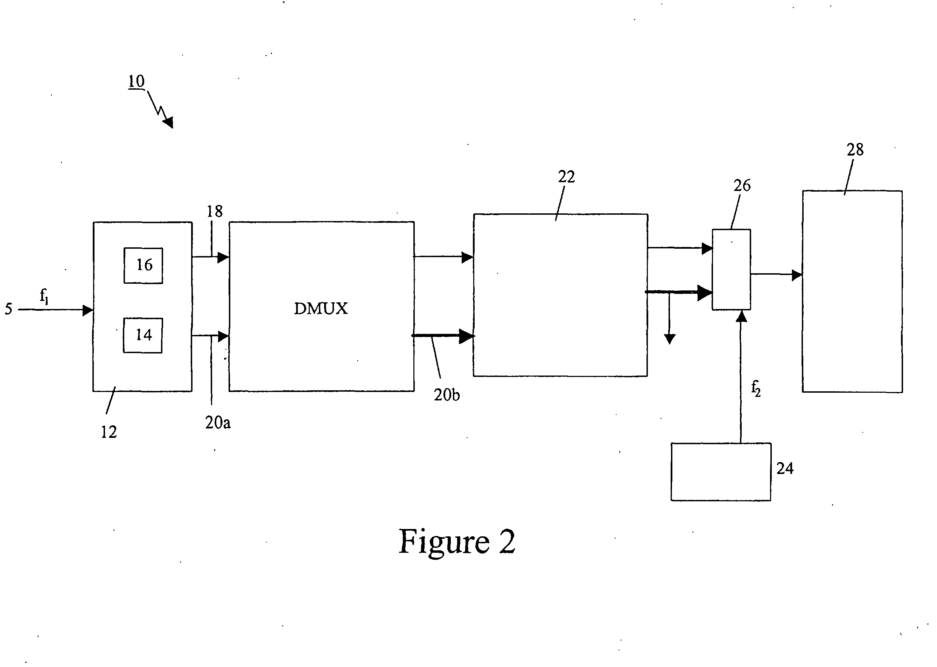

Referring to Figure 2, a single data signal and a single synchronizer 10 in the SONET standard is depicted to facilitate an understanding of the invention. The signal 5 is an optical carrier originating from a user, modulated with a continuous data stream and comprises a digital optical data signal 5, for example, a 10 gigabit OC-192 signal 5. The signal 5 originates from a user and is driven by a local reference clock of arbitrary rate. The signal 5 is converted from an optical signal into an electrical signal in an optical to electrical converter (not shown) and is received into a transparent synchronizer through an input optical fibre into a data recovery unit 12.

The data recovery unit 12 recovers data bits from signal 5 and includes a receiver 14 and an agile clock recovery circuit 16. The receiver 14 includes a data recovery circuit (not shown). The agile clock recovery circuit 16 is a phase locked loop (PLL) and is capable of clock recovery over a broad continuous range of bit rates. The agile clock recovery circuit 16 determines the average bit arrival rate of data from signal 5 thereby deriving a data clock 18 from the signal 5. The data clock 18 is a simple clock, reflective of the bit rate of the signal 5, and is not gapped. An example of such a clock recovery circuit is disclosed in U.S. patent application 09/218053 filed on December 22, 1998, entitled "Apparatus and Method for Versatile Digital Communication" by Habel et al., assigned to Nortel Network Corporation.

The data clock 18 and the data bits 20a (or "data") are of the same bit interval and are outputted from the data recovery unit. The data 20a may be demultiplexed into multiple parallel tracks for signal processing at lower rates. In Figure 2, the data 20a is demultiplexed in multiple stages, first by a factor of 8 and then by a factor of 12, to provide 96 parallel tracks of data 20b. The bit interval in the data clock 18 is correspondingly increased in multiple stages.

Both the data clock 18 and the data 20b are passed into a synchronizer circuit. In Figure 2, the synchronizer circuit 22 is a field programmable gate array circuit in which the data bits 20b are mapped into a format suitable for a synchronous standard, for example, SONET SPE frame of a STS-1 signal. The mapping function is synchronized using an internal local SONET clock 24 of bit rate f₂, which is a simple clock synchronous to the SONET standard.

In an embodiment, the data bits 20b are mapped into SONET frames mapping with evenly interspersed fixed stuff bits and adaptive stuff bits by a mapping unit 26 in accordance with a mapping algorithm. The frame has two areas: transport overhead (TOH) and the synchronous payload envelope (SPE). The TOH is composed of section overhead (SOH) and line overhead (LOH). The SPE is further divided into two parts: the STS path overhead (POH) and the payload. Data bits 20b are carried in the payload. The overhead information facilitates multiplexing and has OAM&P capabilities.

The mapping unit 26 divides the frame into evenly sized blocks. For example, an STS -192 SPE can accommodate 1138 such blocks. The mapping unit 26 also determines the number of fixed stuff bits for each block. Each block includes data bits, fixed stuff bits and adaptive stuff bits. As an example, each block may comprises a data field having 1023 bits for data, a control field having 16 bits, and a spare field having 17 bits for other use. The number of adaptive stuff bits to be inserted in a block are determined based on a stuff indicator β, as will be further discussed below.

Based on β, the mapping unit 26 defines a valid location, which is a location for a data bit, and an invalid location, which is a location for a stuff bit for the next block based on the phase information accumulated when the data bits of the current block are mapped. In addition, the mapping unit 26 also distributes evenly the overhead bits at the time of the actual mapping, but realigns them in appropriate timeslots provided according to the SONET standard after mapping so that the frame is recognized by SONET equipment. An example of the mapping function is set out in Copending European Patent Application number EP1067722, published January 10, 2001 and titled "Mapping Arbitrary Signals Into SONET", Roberts, et al.

Rather than stuff bits, stuff words may be used, for example, n*8 bits word size, for example, so as to accommodate high rate mapping in CMOS.

The data mapped into the SONET frames of a SONET signal is of the synchronous rate f₂ and is multiplexed in one or more stages with other SONET signals into a higher rate data streams which are then inputted into a suitable bandwidth manager 28, converted from electrical into optical signals, for routing into a SONET network

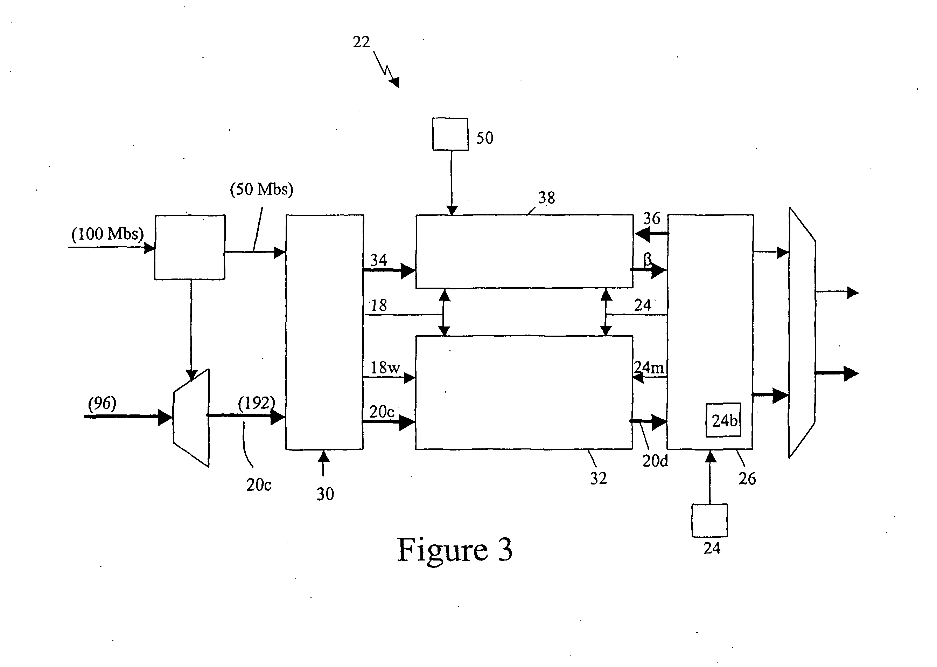

Referring to Figure 3, the synchronizer circuit 22 is depicted in greater detail. The synchronizer circuit 22 is a digital circuit, for example, a field programmable gate array (FPGA), a programmable ASIC, or the like, and includes a framer and gapper unit 30, a buffer unit 32, and a mapper unit 26.

The data bits 20b and the data clock 18 are passed into the synchronizer FPGA. In the example of Figure 3, the data clock 18 rate f₁ is 100 Mb/s and the data bits have a bandwidth of 96 tracks. For processing at lower rates, the data bits 20c are further demultiplexed to 192 parallel tracks and the bit interval of the data clock is correspondingly increased to 50 Mb/s. The data clock 18 of the appropriate bit interval and the data bits 20c are inputted into the framer and gapper unit 30.

The framer and gapper unit 30 provides framing, error checking and counting, code conversion, parity correction, and other performance monitoring functions. Additional functions are performed by the framer and gapper unit but are dependent upon the particular type of service.

The framer and gapper unit 30 may also be provided with a tributary control system (TCS) (not shown), which is a microprocessor that receives clock rate information on line from the receiving unit 12, examines the data rate, selects the logic configuration of the gapper unit adequate for that data rate, and configures gapper unit accordingly. The TCS contain circuits specific to the client data and clock rate.

The framer and gapper unit may also have minimal functionality and merely pass on the clock, or divide the clock.

Within the framer and gapper unit 30, a multibit frequency value, or "multibit value" is determined in association with the data clock 18. Using a multibit clock circuit (not shown), multibit values are generated for every cycle of the data clock 18, thereby producing a data multibit clock 34 of multibit values of rate f₁, in association with the data clock 18. The multibit value is based on the word size of the data clock 18, namely 2", where n is the bit size of the data clock 18. For example, a 16 bit data clock has a constant multibit clock word value of 2¹⁶, or 65536. This value also represents the maximum multibit value for a 16 bit clock. Similarly, the maximum multibit value for a 32 bit clock would be 2³² or 4294967295.

The framer and gapping unit 30 may also provide removal, or "gapping", of overhead bits that are desired not to be mapped into an SPE frame, for example, SONET Line and Section Overhead bits, thereby increasing mapping efficiency. Where overhead is removed, in this embodiment the multibit value is varied based on the number of bits removed. For example, SONET Line and Section Overhead are removed (gapped), representing the removal of 3 of 90 bits (3/90 bits). This in turn represents the retention of 87 of 90 bits (87/90 bits). This fraction is then applied to the 2" value, in this example, 2¹⁶ or 65536, to produce a value of 63351.466667. This value is rounded to the closest integer to produce a multibit value of 63351 for the particular cycle of the data clock 18. An error value is then computed as the difference between the fractional multibit value and the integer value (0.466667 in this example). This error value is retained for the calculation of the multibit value for the next data clock cycle. It is added to the fractional multibit value before rounding to the closest integer to produce the next multibit value (in our example, 63351.466667+0.466667=63351.93332, resulting in a multibit value of 63352 for the next data clock cycle. This is required to ensure that there is no error accumulation due to rounding.

In this manner Multibit values also represent the fraction of gapping in terms of the maximum multibit clock value and the associated simple data clock. The multibit clock value is an instantaneous phase step. It conveys frequency only through its associated simple data clock. It communicates frequency by indicating gapping information in relation to its associated simple clock. For example, if the multibit value is the full scale multibit value, this indicates that there is no gapping. In this case, the frequency of the multibit clock is the frequency of its associated simple clock. If the multibit value is some fraction of the full scale value, the frequency represented by the multibit clock is the frequency of the simple clock scaled by that same fraction.

Multibit values are transferred in the form of integers and may be communicated every cycle or less frequently, for example, every fourth cycle or every eighth cycle, to allow for more processing time. The stream of communicated multibit values constitutes a data multibit clock 34.

The decimal component (ie. the fractional part) of the value, namely: the .466667 in this example, is retained and used for the correction of inaccuracies due to rounding. Periodically, a particular multibit value in the multibit clock 34 is increased or decreased by an integer, depending on whether there was rounding up or down to obtain the integer, to compensate for the decimal components. For example, a multibit clock 34 may communicate the following stream of multibit values at a particular internal of time: 63351 63352 63351 63351 63351 63352 63351 63351 63351 63352

The data bits 20c from the framer and gapper unit 30 are written into the buffer unit 32, for example, a FIFO elastic store, in association with a write clock 18w, which is used to clock the input of data into a buffer. The write clock is derived from the data clock 18 of the asynchronous signal.

If not all data is written into the FIFO 32, the write clock 18w will be appropriately gapped (ie. data at the appropriate byte location will not be written into the elastic store).

Data is emptied, or read 20d, from the FIFO 32 into the mapper unit 26 under the control of a mapping clock 24m, which is a read clock driven by the SONET clock 24. The SONET clock 24 is gapped at appropriate instants as determined by the mapping algorithm in the mapper unit. In this way, the data bits 20d are synchronized to the mapping frequency. The mapping clock 24m is also referenced so as to maintain the FIFO fill at about half so as to avoid buffer depletion or overflow, which would result in lost data.

In the mapper unit 26, the data bits 20d are read out of the FIFO 32 and mapped into the respective SONET SPE frame in blocks with evenly interspersed fixed stuff bits and adaptive stuff bits, as set out above, under the control of the mapper clock 24m derived from the SONET clock 24. Large blocks may be used for bit rate efficiency. Further, stuff words may be selected to be of a size that scales linearly with n in an STS-3nC frame.

A block clock 24b also derived from the SONET clock 24 is appropriately gapped, to maintain room for TOH bits, POH bits, and fixed stuff bits, of the SONET overhead. The block clock 24b clocks out data bits, fixed bits, and adaptive stuff bits from the mapper unit 26. The mapper clock 24m has the same rate as the block clock 24b but is further gapped under the control of β.

The value β represents the number of data words (ie. valid data) used within a fixed block. These data words are uniformly distributed across the block. β is analogous to a traditional stuff bit indicator. β is a value between 0 and the maximum word size of the block. The remaining available words in a block are stuff words. β is added to a block and is used in mapping the next block. The manner in which β is generated is set out in greater detail below.

The mapping unit 26 also generates a SONET multibit clock 36 based on multibit values per cycle of the SONET clock 24. The multibit values represent the bit rate of the SONET clock 24. The bit rate of the SONET multibit clock is f₂, based on the SONET clock rate 24. As with the data multibit values, the SONET multibit values represent the fraction of SONET clock used to read out data bits (ie. ungapped) to a maximum multibit clock. Again, for a 16 bit clock, the maximum multibit value is 65536.

A control loop unit 38 generates the β value that is included per block and is used by the mapper unit 26 in justifying and mapping the asynchronous data signals into appropriate SONET frames. The control loop unit 38 further generates a frequency value F that represents the relationship between the bit rate f₁ of the asynchronous data signals and the bit rate of a SONET signal f₂, expressed as fraction of a multibit word for high resolution.

More particularly in this embodiment, the control loop unit is analogous to a Phase locked loop (PLL), as later described, and is referred to as a digit PLL 38. The Digital PLL 38 calculates F which represents the frequency of the asynchronous signals of rate f₁ in a specified sampling interval, in this case, phase sampling interval, which is a specified multiple of the SONET clock rate f₂, and is a fraction representing the data clock rate f₁ over the SONET clock f₂ rate, expressed as a multibit word. In other words, it calculates F as the block relative frequency, which is a non-integer value F, which represents the exact frequency (to an arbitrary accuracy) of the data signals in units of words per block relative to the ungapped SONET clock 24 at the synchronizer. F is a higher resolution indicator of fractional frequency information than a traditional stuff indicator inside a circuit.

The value β is an integer output truncated from the value (F + the last residual fraction). The fractional part of the above becomes the next residual fraction.

Values for F and β are transmitted with each block of words. Because the synchronizer and desynchronizer are synchronous, being ports of network elements in a synchronous network, the data clock 18 bit rate f₁, can then be recovered at the far end at the desynchronizer based on the F values transmitted with each block, as further detailed below. Traditionally, this frequency was reconstructed at the desynchronizer.

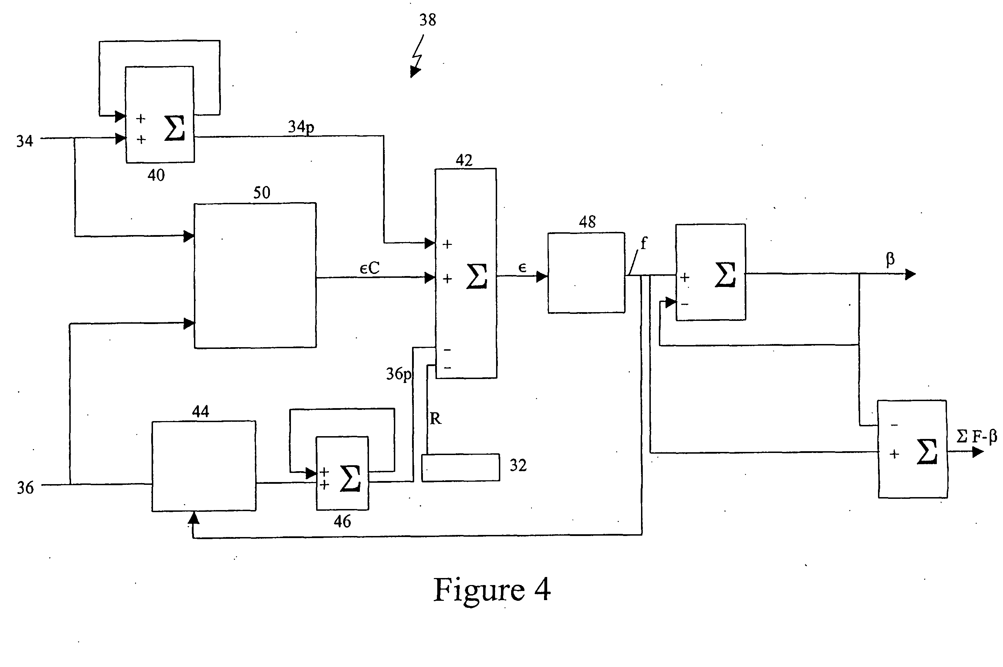

Referring to Figure 4, the digital PLL 38 is described in greater detail. The 16 bit data multibit clock 34 from the framer and gapper unit 30 is inputted frequency to phase converter such as into a digital summer subcircuit 40, which continuously adds together the multibit values received to a 32 bit accuracy. The sum is periodically sampled. For example, the digital summer 40 may sum multibit values and sampled every 10 or 100 cycles, as selected. The summed output yields phase information. The output is inputted into a phase comparator 42, such as a digital subtractor.

The SONET multibit clock 36 is generated in the mapper unit 26 and is formed using the F value from previously transmitted blocks to gap the SONET clock 24 (with its associated simple clock). As set out above, transport overhead, path overhead and block overhead have already been gapped. Preferably, all overhead not available for data is gapped.

The SONET multibit clock value is further reduced by the amount of the average number of gaps transmitted (ie. gaps in relation to available data words not being used for incoming data (ie. stuff bytes) are removed) in an *f*-gapping subcircuit 44. The *f*-gapping unit 44 is analogous to a voltage controlled oscillator in that the *f* value is a frequency that is imposed through the gapping function, which is analogous to voltage controlling the frequency of a VCO. Having regard to the proportion of data bits unavailable due to overhead in a given clock cycle, the remaining available data bits is reduced by the proportion of bytes used for data. The resulting proportion is to be applied to the corresponding SONET multibit values.

For example, in a given block, 10% of the bytes in a block are unavailable for data or stuffing being overhead. As such, 90% of the bytes remain available. Of this 90%, half of the bytes are used for data. Therefore 90% x 50% = 45% of the block is non-data and accordingly stuffed with stuff bytes. The 45% proportion is applied to the corresponding multibit value to generate a multibit value reflecting the *f*-gapping and overhead gapping, for example 45% x 65536 = 29491.2 The fractional part of *f* will not accumulate because of the synchronizer PLL action that compensates for any errors due to the fractional part of *f*. Therefore it is not necessary to pass the 0.2 through the feedback loop.

The multibit values from the SONET multibit clock 36 as reduced by the proportion computed following the *f*-gapping unit 44 are continuously summed in a frequency to phase converter 46 such as a digital summer and integrated to yield phase information

The digital subtractor receives the inputted phase information from the data multibit clock 34p and from the SONET multibit clock 36p and relates the phases. The SONET multibit phase values are subtracted from the data multibit values, the value of the difference being an error signal ε. In determining the difference in phase (ie. phase imbalance) between the data multibit clock 34p and the SONET multibit clock 34, the digital subtractor operates as a phase comparator, where traditionally, the fill of the FIFO operated in that capacity.

A constant offset reference value R from the FIFO 32 is also inputted into the digital subtractor 42 to be subtracted from the data multibit phase values. In this manner, the fill of the buffer can be kept centred.

The output ε of the phase comparator 42 is inputted into a low pass filter (LPF) 48 that maintains and outputs a running average of the error signals. It smoothes out any rapid changes in error signals (changes that occur at a frequency above its cutoff frequency) to enable the control loop to converge to a correct and stable value. Preferably, the LPF 48 is selected to maintain a whole loop bandwidth, for example, of approximately 200 Hz. An output F from the LPF is then returned to the *f*-gapping unit 44 for use in *f*-gapping of subsequent SONET multibit values.

The combination of the *f*-gapping unit 44, the SONET multibit clock frequency to phase converter 46, the phase comparator 42 and the LPF 48 collectively operate as a PLL, respecting the data multibit clock 34.

The value *f* is added to the block overhead for a block, and is transmitted with the next block. *f* is transmitted with every block *f* is added to block overhead (ie part of the control field) in the mapper unit.

For example, assuming a 16 bit clock and a block size of a maximum of 1024 words, and an *f* value of 20000, β may be calculated as follows:
Fₙ = $\frac{\text{f}}{{\text{2}}^{\text{16}}}$ * max. no. words/block = $\frac{\text{20000}}{\text{65536}}$ * 1024 = 312.5
βₙ = integer portion of (Fₙ + ρₙ₋₁)
ρₙ = fractional portion of (Fₙ + ρₙ₋₁)
where n represents the particular time of the particular block.

β is added to the block overhead of the next block in the form of an integer. The fractional portion ρ is retained for the next calculation of β to be included in the overhead of the next block.

Preferably, block overhead is Forward Error Correction (FEC) encoded, so as to provide a means to ensure that the block overhead associated with the F and β values are transmitted with high reliability when received.

While the values for F and β are included in block overhead for each block transported, alternatively, the values may be included in each block in the form of F-β and β. In this manner, a degree of data compression is achieved. Alternatively, ∑(F-β) and β can be transmitted. This provides a degree of data compression as before and by transmitted ∑F rather than F, any corrupted value of ∑F avoids any long term phase error and causes only a phase transient.

Additional high resolution phase correction may be provided so as to ensure the generation of accurate F values outputted from the phase comparator 42.

The data multibit clock 34 and the SONET multiple clock 36 are each timed from their corresponding simple clocks. The corresponding simple clocks have no harmonic relationship to each other and are generally asynchronous.

The instant of time at which a data multibit clock 34 is digitally integrated by the digital summer 40 will not generally correspond to the timing instant for the SONET clock 34. The time difference resulting in imperfect sampling creates waiting time jitter.

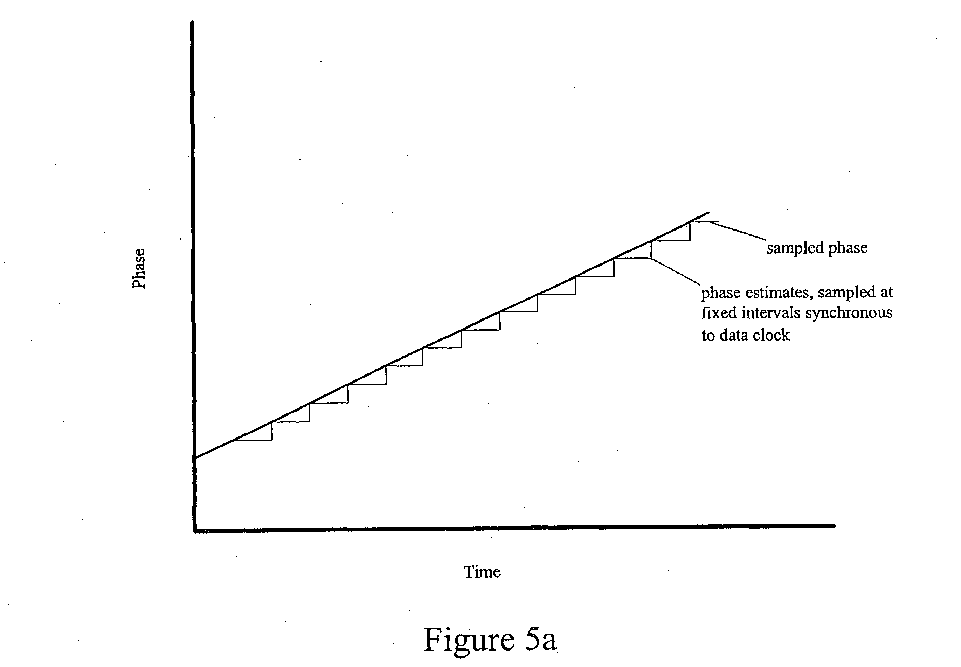

More particularly, referring to Figure 4, the phase of the data multibit clock 34p is determined by the integration of the sum of the multibit values received by the digital summer 40. It is a continuous function that is synchronous to the data's simple clock 18. Graphically represented as a function of time, yields a constant linear relationship between real phase and time, as exemplified in Figure 5a. However, as the data phase information is only updated periodically (ie. the integration of the summed data multibit values is performed periodically) in fixed intervals, for example, once every 100 cycles, the estimated phase as a function of time yields a stepped relationship, also as set out in Figure 5a.

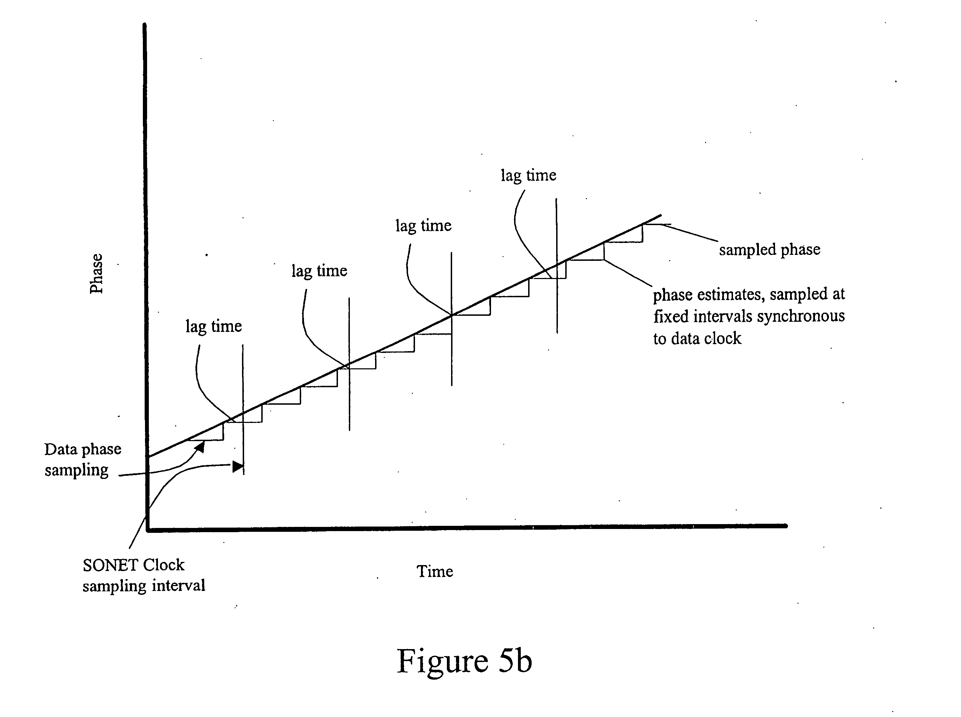

Referring to Figure 4, phase detection is performed by the digital subtractor 42 using phase information derived from the data multibit values and the SONET multibit values. The SONET multibit clock 36 and the phase comparator 42 operate synchronously to the SONET simple clock 24, which is generally asynchronous with data simple clock 18. As a result, phase comparison of the clock phases are conducted asynchronously. As depicted in Figure 5b, there is a varying amount of lag time between the SONET clock sampling interval and the interval in which the data phase information is updated, resulting in an underestimation of the phase of the data multibit clock 34p. The lag time difference represents waiting time jitter. Because the lag time varies for different phase samplings at the phase comparator 42, it cannot be averaged or filtered.

The jitter may be corrected by obtaining a real time measurement of the time lapse between the last update of the SONET multibit clock and the time at which phase difference is estimated at the phase comparator/digital subtractor. Referring to Figure 4, a detailed phase detector 50 uses a real time measurement (ΔT) of the difference in sampling interval between the data multibit clock 34 and the SONET multibit clock 36 and computes from it a phase error correction as described below. The real time measuring function (ΔT) may be performed by an ASIC sub-circuit, capacitor chain, external components, or the like, and receives frequency input from the data multibit clock 34 and from the SONET multibit clock 36 and measures the real time lapsed. The time lapse is measured to an adequate resolution, for example, 0.1 nanosecond resolution.

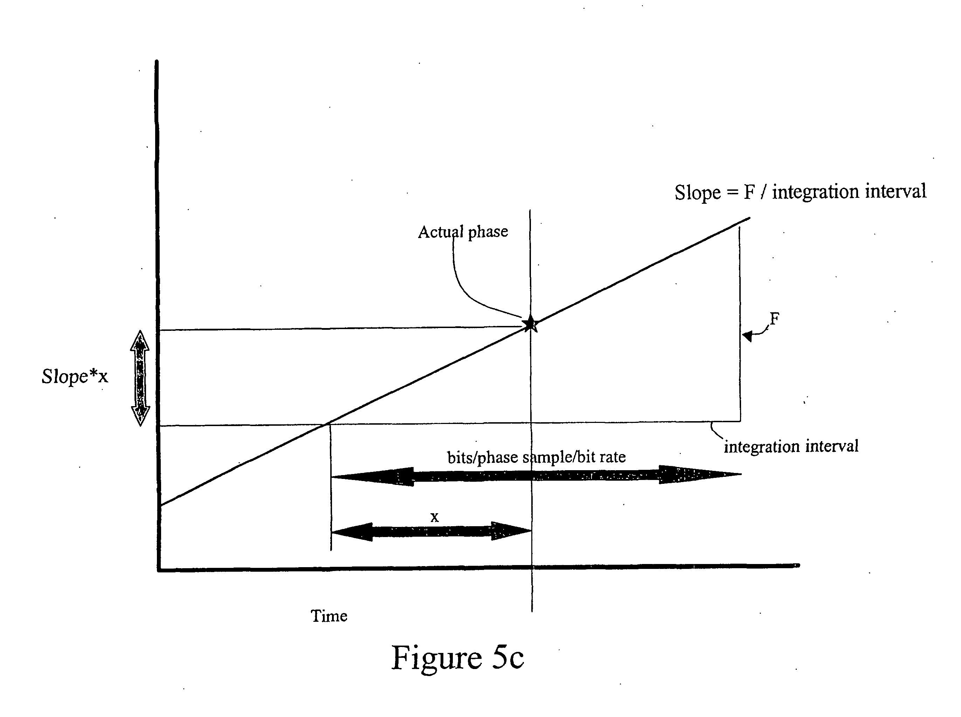

Referring to Figure 5c, the phase step at the data multibit clock integration instant is the data multibit clock value F. The real time measurement is the time lapse *x*. The detected phase error measurement *y* can be determined by scaling the data multibit clock value F as follows:
*x*/integration interval = *y*/F
Or alternatively, *y* = F* [*x*/integration interval]
where F is the actual multibit clock value, with *f* being the local and imperfect estimate of F.

Once *y* (the phase error for a sampling interval) is determined, this value is inputted to the phase detector/digital summer and added to the integrated phase values for the sampling interval to derive an actual data phase value, as follows:$\text{Actual data phase = integrated phase values + F* [} \text{x} \text{/integration interval].}$ In this manner, waiting time jitter may be eliminated within the arbitrary resolution of the phase detection and the multibit clocks.

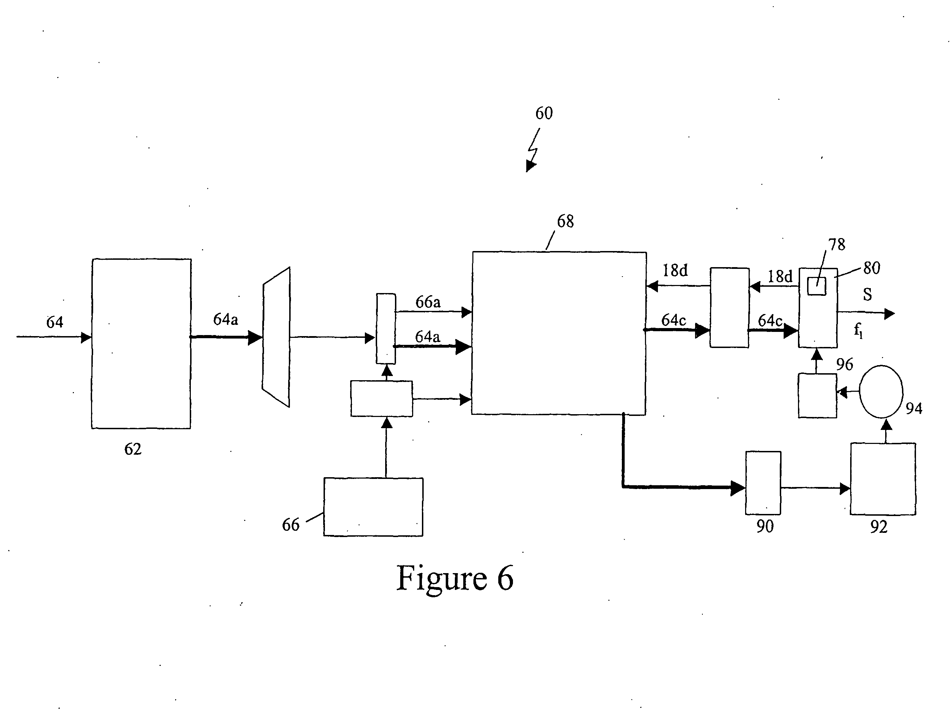

Figure 6 is a block diagram depicting an overview of a transparent desynchronizer 60. A single desynchronizer is depicted to facilitate an understanding of the invention. An optical to electrical backplane interface 62 is an ASIC electrical interface and cross-connect. A high rate, SONET signal 64 comprising appropriately multiplexed signals is received from the SONET network and is converted from optical to electrical signals at the backplane. A plurality of parallel data tracks 64a (for example, 5) are outputted from the backplane and inputted into the transparent desynchronizer 60.

The SONET signal 64a may be demultiplexed, for example, into 80 parallel data tracks, and inputted into the desynchronizer circuit 68, in this example, also an FPGA. As will be further detailed below, the desynchronizer performs a reverse mapping function in this embodiment using the F and β values sent with each block to extract the original data bits, absorb the fixed stuff bits and the adaptive stuff bits and for clock recovery of the original data clock 18. SONET overhead and stuff bits in the SPE are removed. The desynchronizer 60 is synchronized to a clock 66, which is a clock synchronous to the SONET network.

The data signal 5, recovered in the original format and data rate f₁, is received by a transmitter, converted from electrical to optical format, and transmitted to the associated network or local user in optical format.

The data received from the payload of the SPE frame is presented to the mapper, and includes data bits, together with the fixed and adaptive stuff bits.

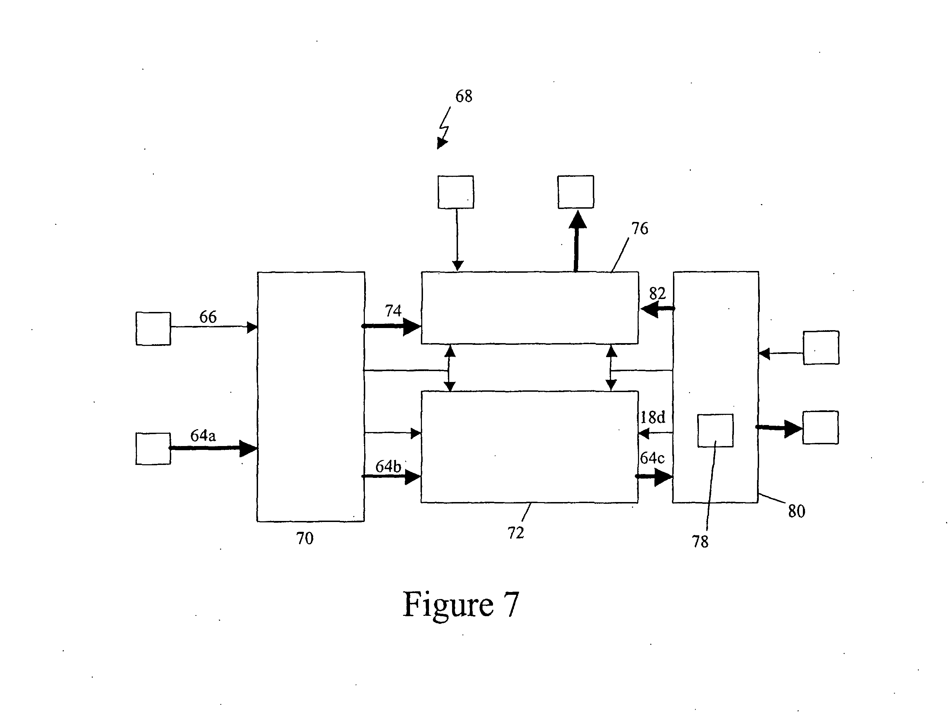

Referring to Figure 7, the desynchronizer FPGA 68 is depicted in greater detail. The SONET signal 64a multiplexed into 80 parallel paths and the local SONET clock 66 are inputted in a pointer processor/gapper unit 70. The pointer processor/gapper unit 70 includes a pointer generation function. The pointer is an offset value that points to the byte where the SPE begins thereby compensating for frequency and phase variations (including transmission signal wander and jitter) by phase-aligning incoming payloads. In this unit, gaps are included or deleted for pointer adjustments.

The pointer processor/gapper unit 70 also performs an overhead gapping function to avoid the writing of section, line and block overhead into a buffer unit 72, in this case, FIFO, elastic store, while enabling the writing of extracted data from the SPE payload into the buffer. The SONET clock 66 is gapped to form a block clock (not shown). The block clock has gaps evenly spread across the frame to account for TOH, POH, and remainder fields so as to reject TOH and fixed stuff bits.

Using β values associated with a block, the block clock is further gapped to produce a mapping clock (not shown) which gaps out data bits so that only data bits from the original signal may be clocked out of the pointer processor/gapper unit 70.

The degree of gapping associated with pointer processing, SPE overhead and block overhead is applied in the formation of a multibit clock 74, which is generated in the pointer processor/gapper unit 70. To recap, a multibit value is a value representing the fraction of non-gapped data bits over the maximum multibit clock value in a cycle of the local SONET clock, rounded to the nearest integer. The multibit values over multiple cycles form the multibit clock. This multibit clock 74 is driven by the SONET clock bit rate f₂.

The multibit values forming the multibit clock are then inputted into the desynchronizer PLL 76. As further detailed below, phase error is detected and corrected in the desynchronizer PLL 76, and the clock recovery of the original clock is performed. The recovered original data clock is then used in the reconstruction of the original signal for use in user specific hardware.

Data bits 64b from the pointer processor/gapper unit 70 are written into the FIFO 72 using the mapping clock. The FIFO 72 is emptied under the control of a data clock 18 outputted by a clock recovery circuit 78 in a desynchronizer framer and gapper unit 80. The data clock 18 is substantially the same bit rate f₁ as the original data clock 18d, being reconstructed from the F values transmitted with each block. There is some variation in the frequency as reconstructed from the F values so the resulting frequency is not exactly the same as the original frequency of the data, where overhead was removed prior to mapping at the synchronizer.

The FIFO width may be advantageously chosen to match the stuffing word size. This method allows very large FIFO widths to be used without excessive waiting time jitter. Examples of such widths are 24 bits for an STS-3 envelope and 6144 bits for an STS-768 envelope.

The desynchronizer gapper and framer unit 70 also recreates the overhead from the original data format earlier removed at the synchronizer and gaps the recreated overhead. The desynchronizer gapper and framer unit 70 also performs framing and parity check function, and uses the data clock to synchronize the reading out of data from the FIFO. The resulting data is outputted in association with a higher rate clock than the read clock.

In association with the data clock 18d, a data multibit clock 82 is also produced by the desynchronizer gapper and framer unit 80. This data multibit clock 82 is also based on multibit values representing the fraction of non-gapped data bits over the maximum multibit clock value in a cycle of the reconstructed data clock, rounded to the nearest integer. The multibit values over multiple cycles form the multibit clock. This multibit clock is driven by the data clock rate 18d.

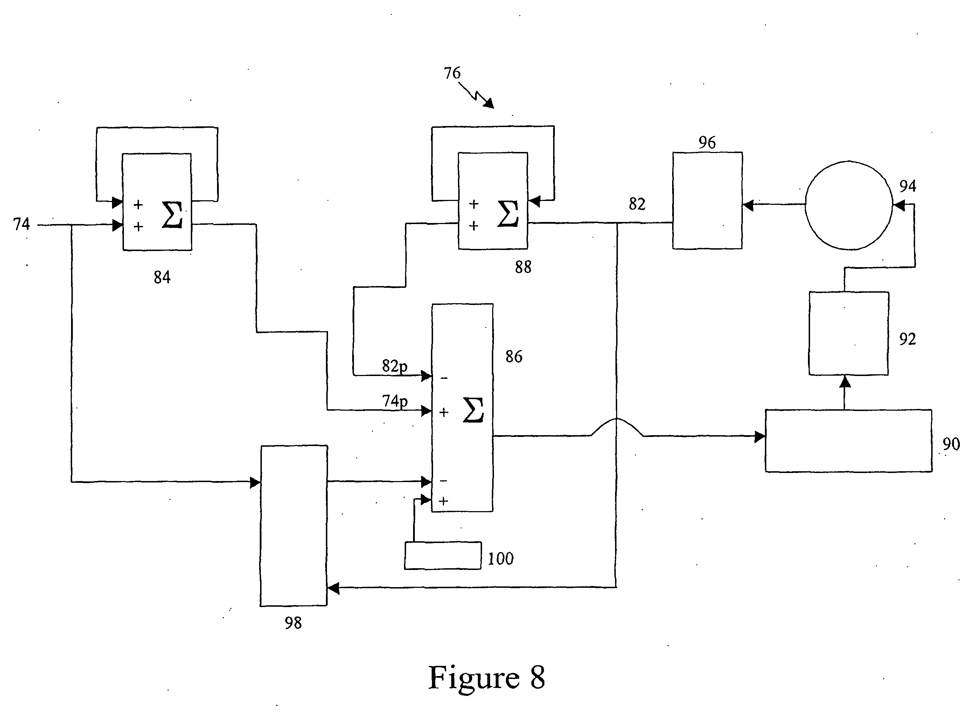

Referring to Figure 8, the desynchronizer PLL 76 is depicted in greater detail. The F values at the block rate are received and converted into phase at a frequency/phase converter 84. The converter is a digital summer which sums the F values and periodically integrates the values to yield 32 bit phase information. The phase information is inputted into a phase comparator 86.

The SONET multibit clock 74 is formed by gapping the local SONET clock 66 using the F values from each received block. This multibit clock is converted into phase at a frequency/phase converter 84. The converter is a digital summer which sums the multibit values and periodically integrates the values to yield 32 bit phase information. The phase information is also inputted into a phase comparator 86.

The phase comparator 86 is similar to the phase comparator at the synchronizer, being a digital subtractor. The phase comparator 86 compares the phase of the F values from the phase of the data multibit clock 82 and the SONET multibit clock 74 and outputs an error signal ε, representing the difference between the multibit clocks.

The output, or error signal, from the phase comparator 86 is averaged to a stabilized level. The output is inputted into a low pass filter (LPF) 90, followed by a digital to analog converter 92. In this manner, digital words are transformed into an analog voltage level.

The LPF 90 is a single order LPF and is selected so as to produce a PLL with a desired closed loop bandwidth in conjunction with the VCO gain constant selection. A digital to analog converter 92 converts the digital output from the phase comparator 86 to an analog signal and outputted to the analog VCO 94. The VCO 94 responds to input voltages by changing its output frequency. An "actual" PLL is formed with the phase comparator 86 as well as the LPF 90 and the VCO 94.

As a physical oscillator, the VCO 94 gives rise to phase noise. The amount of phase noise that is not tracked by the PLL and hence seen as jitter at the output of the PLL 90 is determined by the closed loop bandwidth of the PLL around the VCO 94. However, where the bandwidth is as wide as possible, phase noise can be tracked and will not result in jitter. Here, the PLL 94 is not used for smoothing out gaps in the write clock, as all phase transients have already been filtered before the loop and waiting time jitter has been eliminated to arbitrary accuracy. By incorporating a separate phase determination from the FIFO 72 fill, the VCO 94 can be locked in a wide bandwith loop, so as to track substantially all out-of-phase noise and avoid delays resulting from large elastic stores traditionally required to absorb untracked wander.

Advantageously, a PLL bandwidth may be in the order of 1 MHz. This allows the use of a low cost, wide range oscillator. The wide bandwidth serves to suppress the larger phase noise from such an oscillator.

The output from the VCO 94 is converted in an analog to digital converter 96 and then gapped for overhead. If overhead was not removed from the data signal at the synchronizer, then no gapping occurs.

In association with the reconstructed data clock 18d, a data multibit clock 82 is formed from the analog VCO 94 for the recovered data clock. The multibit clock is inputted into a frequency to phase converter 88. This converter 88 is also a digital summer which continuously sums the multibit values received, which is periodically integrated to yield phase information. The phase information from the analog VCO 94 for the recovered data clock 18d is inputted into the phase comparator 86 with the local SONET multibit clock to be subtracted from the phase information from the F values from the received blocks.

Imperfect phase sampling intervals due to the time differentials between the phase comparator and the phase estimator based on the reconstruction of the multibit clock values may result in jitter that can be eliminated to arbitrary accuracy by a detailed phase extrapolation. Similar to the synchronizer digital PLL, the desynchronizer PLL is provided with a detailed phase detector 98 similar to that provided on the synchronizer.

A constant reference value 100 is also inputted into the phase comparator 86 to be added to the F values, to keep phase centred in the buffer.

In this manner, almost any digital optical signal with a continuous clock of an arbitrary rate received may be mapped into a synchronous envelope, for example, a SONET STS-3nC envelope. In this architecture, waiting time jitter and wander are eliminated to arbitrary accuracy.

This architecture contributes to a transparent system that is scaleable to high data rates, for example, 40-gigabit rates. At the synchronizer, this architecture enables the expression of a data signal frequency with arbitrary accuracy, being referenced to both the system's local clock and the data signal's own clock, and enables the use of stuff words that scales linearly with the increased bit rate. The fill of the buffer does not drive the word stuff determination. Rather, the phase value is separately determined and separately smoothed, corrected and filtered in the synchronizer digital PLL. Similarly, at the desynchronizer, the architecture enables phase values that drive the output PLL to be separately determined from the buffer fill, the smoothing and filtering of noise and phase transients having already been completed prior to input into the VCO. As such, there is no phase corruption by write and read clock gaps, while buffer fill is maintained. At the desynchronizer, the PLL may be operated at wide bandwidths.

The present invention has been described with regard to preferred embodiments. However, it will be obvious to persons skilled in the art that numerous modifications, variations, and adaptations may be made to the particular embodiments of the invention described above without departing from the scope of the invention, which is defined in the claims.

## Claims

1. A method of synchronizing a data signal for transport across a synchronous communications network, the method comprising steps of:
calculating a timing estimate (F) indicative of a relationship between a data rate (f1) of the data signal and a reference frequency (f2) of the synchronous communications network;
mapping data of the data signal to a synchronous signal of the synchronous communications network in accordance with the reference frequency (f2), while inserting stuff bits into the synchronous signal in accordance with the timing estimate (F); and
communicating the timing estimate (F) through the synchronous network.

2. A method as claimed in claim 1, wherein the timing estimate (F) comprises any one or more of:
a ratio between the data rate (f1) and the reference frequency (f2);
a difference between the data rate (f1) and the reference frequency (f2); and
a phase difference between a recovered data clock signal associated with the data rate (f1), and a reference clock signal associated with the reference frequency (f2).

3. A method as claimed in claim 1, wherein the data rate (f1) is represented by a data multi-bit clock signal comprising sequential multi-bit words generated at a frequency substantially equal to a bit rate of the data signal, a respective value of each multi-bit word being representative of a proportion of bits of the data signal to be transported across the synchronous communications network.

4. A method as claimed in claim 3, wherein the step of calculating the timing estimate (F) comprises steps of:
calculating a data phase value based on the data multi-bit clock;
calculating a synchronous phase value based on the reference frequency (f2);
comparing the data phase value and the synchronous phase value at a predetermined sample rate, and generating an error value indicative of the comparison result; and
calculating the timing estimate (F) as a time average of the error value.

5. A method as claimed in claim 4, wherein the step of calculating a data phase value comprises a step of adding a predetermined number of successive words of the data multi-bit clock.

6. A method as claimed in claim 4, wherein the step of calculating the synchronous phase value comprises steps of:
generating a second multi-bit clock signal comprising sequential multi-bit words generated at a frequency substantially equal to the reference frequency (f2), a respective value of each multi-bit word being representative of a proportion of bits of the synchronous signal that are available for carrying bits of the data signal;
adding successive words of the second multi-bit clock; and
integrating the addition result.

7. A method as claimed in claim 4, wherein the step of comparing the data phase value and the synchronous phase value comprises a step of subtracting the synchronous phase value from the data phase value.

8. A method as claimed in claim 7, wherein the step of comparing the data phase value and the synchronous phase value comprises a further step of subtracting a reference value R from the data phase value.

9. A method as claimed in claim 4, wherein the predetermined sample rate corresponds with a rate at which the data phase value is recalculated.

10. A method as claimed in claim 1, wherein the step of communicating the timing estimate (F) comprises a step of inserting the timing estimate into the synchronous signal, such that the timing estimate (F) is transported across the synchronous communications network.

11. A method as claimed in claim 1, wherein the step of mapping data of the data signal to the synchronous signal comprises steps of:
buffering the data in an elastic store in accordance with a data clock having the data rate (f1);
reading the data from the elastic store in accordance with a read clock having the reference frequency (f2);
inserting the read data into a synchronous payload envelope, hereinafter referred to as SPE, of the synchronous signal and
inserting stuff bits into the SPE in accordance with the timing estimate (F).

12. A method as claimed in claim 11, wherein the stuff bits are substantially evenly distributed within the virtual tributary of the SPE.

13. A method of desynchronizing a data signal transported across a synchronous communications network, the method comprising steps of:
receiving a synchronous payload envelope, referred to as SPE, of the synchronous communications network, the SPE containing data of the data signal and a timing estimate (F) indicative of a relationship between a data rate (f1) of the data signal and a reference frequency (f2) of the synchronous communications network; and
demapping the data of the data signal from the SPE in accordance with the reference frequency (f2); while extracting stuff bits from the synchronous signal in accordance with the timing estimate (F).

14. A method as claimed in claim 13, wherein the timing estimate (F) comprises any one or more of:
a ratio between the data rate (f1) and the reference frequency (f2);
a difference between the data rate (f1) and the reference frequency (f2); and
a phase difference between a recovered data clock signal associated with the data rate (f1), and a reference clock signal associated with the reference frequency (f2).

15. A method as claimed in claim 13, wherein the step demapping data of the data signal from the SPE comprises steps of:
deriving an Rx local clock having a frequency corresponding to the reference frequency (f2) of the synchronous communications network;
buffering the data in an elastic store in accordance with the Rx local clock and the timing estimate (F);
deriving a recovered data clock having a frequency substantially corresponding to the data rate (f1), using the Rx local clock and the timing estimate (F);
reading the data from the elastic store in accordance with the recovered data clock;

16. A method as claimed in claim 15, wherein the step of buffering the data in the elastic store comprises steps of:
deriving a gapped write clock using the Rx local clock and the timing estimate (F);
using the gapped Rx local clock to write bits of the SPE to the elastic store, such that data bits of the data signal are written to the elastic store, and stuff bits are discarded.

17. A method as claimed in claim 15, wherein the step of deriving a recovered data clock comprises steps of:
supplying the Rx local clock to a desynchronizer Phase-Locked Loop, hereinafter referred to as PLL, and
steering the desynchronizer PLL using the multi-bit value indicative of the timing estimate (F).

## Patentansprüche

1. Verfahren zur Synchronisation eines Datensignals zum Transport über ein synchrones Kommunikationsnetzwerk, wobei das Verfahren die folgenden Schritte umfasst:
Berechnen eines Zeitsteuer-Schätzwertes (F) der eine Beziehung zwischen einer Datenrate (f1) des Datensignals und einer Bezugsfrequenz (f2) des synchronen Kommunikationsnetzwerkes anzeigt;
Umsetzen der Daten des Datensignals auf ein synchrones Signal des synchronen Kommunikationsnetzwerkes entsprechend der Bezugsfrequenz (f2), während Stopfbits in das synchrone Signal entsprechend dem Zeitsteuer-Schätzwert (F) eingefügt werden; und
Kommunikation des Zeitsteuer-Schätzwertes (F) über das synchrone Netzwerk.

2. Verfahren nach Anspruch 1, bei dem der Zeitsteuer-Schätzwert (F) eines oder mehrere von Folgendem umfasst:
ein Verhältnis zwischen der Datenrate (f1) und der Bezugsfrequenz (f2);
eine Differenz zwischen der Datenrate (f1) und der Bezugsfrequenz (f2); und
eine Phasendifferenz zwischen einem rückgewonnenen Datentaktsignal, das der Datenrate (f1) zugeordnet ist, und einem Bezugs-Taktsignal, das der Bezugsfrequenz (f2) zugeordnet ist.

3. Verfahren nach Anspruch 1, bei dem die Datenrate (f1) durch ein Mehrbit-Daten-Taktsignal dargestellt ist, das sequenzielle Mehr-Bit-Worte umfasst, die mit einer Frequenz im wesentlichen gleich einer Bitrate des Datensignals erzeugt werden, wobei ein jeweiliger Wert des Mehr-Bit-Worte einen proportionalen Teil von Bits des Datensignals darstellt, das über das synchrone Kommunikationsnetzwerk zu übertragen ist.

4. Verfahren nach Anspruch 3, bei dem der Schritt des Berechnens des Zeitsteuer-Schätzwertes (F) die folgenden Schritte umfasst:
Berechnen eines Daten-Phasenwertes auf der Grundlage des Mehr-Bit-Taktes;
Berechnen eines synchronen Phasenwertes auf der Grundlage der Bezugsfrequenz (f2);
Vergleichen des Daten-Phasenwertes und des synchronen Phasenwertes bei einer vorgegebenen Abtastrate, und Erzeugen eines Fehlerwertes, der das Vergleichsergebnis anzeigt; und
Berechnen des Zeitsteuer-Schätzwertes (F) als einen zeitlichen Mittelwert des Fehlerwertes.

5. Verfahren nach Anspruch 4, bei dem der Schritt des Berechnens eines Daten-Phasenwertes den Schritt des Addierens einer vorgegebenen Anzahl von aufeinanderfolgenden Worten des Mehr-Bit-Taktes umfasst.

6. Verfahren nach Anspruch 4, bei dem der Schritt des Berechnens des synchronen Phasenwertes die folgenden Schritte umfasst:
Erzeugen eines zweiten Mehr-Bit-Taktsignals, das sequenzielle Mehr-Bit-Worte umfasst, die mit einer Frequenz im wesentlichen gleich der Bezugsfrequenz (f2) erzeugt werden, wobei ein jeweiliger Wert eines Mehr-Bit-Wortes einen proportionalen Teil von Bits des synchronen Signals darstellt, die zur Übertragung von Bits des Datensignals verfügbar sind;
Addieren aufeinander folgender Worte des zweiten Mehr-Bit-Taktes; und
Integrieren des Additionsergebnisses.

7. Verfahren nach Anspruch 4, bei dem der Schritt des Vergleichens des Daten-Phasenwertes und des synchronen Phasenwertes einen Schritt der Subtraktion des synchronen Phasenwertes von dem Daten-Phasenwert umfasst.

8. Verfahren nach Anspruch 8, bei dem der Schritt des Vergleichens des Daten-Phasenwertes und des synchronen Phasenwertes einen weiteren Schritt des Subtrahierens eines Bezugwertes R von dem Daten-Phasenwert umfasst.

9. Verfahren nach Anspruch 4, bei dem die vorgegebene Abtastrate einer Rate entspricht, mit der der Daten-Phasenwert neu berechnet wird.

10. Verfahren nach Anspruch 1, bei dem der Schritt der Kommunikation des Zeitsteuer-Schätzwertes (F) den Schritt des Einfügens des Zeitsteuer-Schätzwertes in das synchrone Signal derart umfasst, dass der Zeitsteuer-Schätzwert (F) über das synchrone Kommunikationsnetzwerk transportiert wird.

11. Verfahren nach Anspruch 1, bei dem der Schritt des Umsetzens von Daten des Datensignals auf das synchrone Signal die folgenden Schritte umfasst:
Puffern der Daten in einem elastischen Speicher gemäß einem Datentakt, der die Datenrate (f1) hat;
Lesen der Daten aus dem elastischen Speicher entsprechend einem Lese-Takt, der die Bezugsfrequenz (f2) hat;
Einfügen der Lese-Daten in einen synchronen Nutzdaten-Umschlag, der nachfolgend als SPE bezeichnet wird, des synchronen Signals;
Einfügen von Stopfbits in den SPE entsprechend dem Zeitsteuer-Schätzwert (F).

12. Verfahren nach Anspruch 11, bei dem die Stopfbits im wesentlichen gleichförmig innerhalb des virtuellen Unterkanals des SPE verteilt sind.

13. Verfahren zum Desynchronisieren eines Datensignals, das über ein synchrones Kommunikationsnetzwerk transportiert wird, wobei das Verfahren die folgenden Schritte umfasst:
Empfangen eines synchronen Nutzdaten-Umschlages, der nachfolgend als SPE bezeichnet wird, des synchronen Kommunikationsnetzwerkes, wobei der SPE Daten des Datensignals und einen Zeitsteuer-Schätzwert (f) enthält, der eine Beziehung zwischen einer Datenrate (f1) des Datensignals und einer Bezugsfrequenz (f2) des synchronen Kommunikationsnetzwerkes anzeigt; und
Rück-Umsetzen der Daten des Datensignals von dem SPE gemäß der Bezugsfrequenz (f2), während Stopfbits aus dem synchronen Signal entsprechend dem Zeitsteuer-Schätzwert (f) abgezogen werden.

14. Verfahren nach Anspruch 13, bei dem der Zeitsteuer-Schätzwert (F) eines oder mehrere der folgenden umfasst:
ein Verhältnis zwischen der Datenrate (f1) und der Bezugsfrequenz (f2);
eine Differenz zwischen der Datenrate (f1) und der Bezugsfrequenz (f2);
eine Phasendifferenz zwischen dem rückgewonnenen Daten-Taktsignal, das der Datenrate (f1) zugeordnet ist, und einem Bezugs-Taktsignal, das der Bezugsfrequenz (f2) zugeordnet ist.

15. Verfahren nach Anspruch 13, bei dem der Schritt der Rück-Umsetzung von Daten des Datensignals von dem SPE die folgenden Schritte umfasst:
Ableiten eines örtlichen Rx-Taktes mit einer Frequenz, die der Bezugsfrequenz (f2) des synchronen Kommunikationsnetzwerkes entspricht;
Puffern der Daten in einem elastischen Speicher entsprechend dem örtlichen Rx-Takt und dem Zeitsteuer-Schätzwert (F);
Ableiten eines rückgewonnenen Datentaktes mit einer Frequenz, die im wesentlichen der Datenraten (f1) entspricht, unter Verwendung des örtlichen Rx-Taktes und des Zeitsteuer-Schätzwertes (F);
Lesen der Daten aus dem elastischen Speicher gemäß den rückgewonnenen Datentakt.

16. Verfahren nach Anspruch 15, bei dem der Schritt des Pufferns der Daten in dem elastischen Speicher die folgenden Schritte umfasst:
Ableiten eines mit Lücken versehenen Schreib-Taktes unter Verwendung des örtlichen Rx-Taktes und es Zeitsteuer-Schätzwertes (F);
Verwenden des mit Lücken versehenen örtlichen Rx-Taktes zum Schreiben von Bits des SPE in den elastischen Speicher derart, dass die Datenbits des Datensignals in den elastischen Speicher geschrieben werden und die Stopfbits verworfen werden.

17. Verfahren nach Anspruch 15, bei dem der Schritt des Ableitens eines rückgewonnenen Datentaktes die folgenden Schritte umfasst:
Liefern des örtlichen Rx-Taktes an eine Desynchronisations-Phasenregelschleife, nachfolgend als PLL bezeichnet, und
Steuern der Desynchronisations-PLL unter Verwendung eines Mehr-Bit-Wertes, der den Zeitsteuer-Schätzwert (F) anzeigt.

## Revendications

1. Un procédé de synchronisation d'un signal de données pour le transport dans un réseau de communication synchrone, le procédé comprenant les étapes consistant à :
calculer une estimation de synchronisation (F) indiquant une relation entre un débit de données (f1) du signal de données et une fréquence de référence (f2) du réseau de communication synchrone;
effectuer une application de données du signal de données vers un signal synchrone du réseau de communication synchrone, conformément à la fréquence de référence (f2), tout en insérant des bits de bourrage dans le signal synchrone conformément à l'estimation de synchronisation (F); et
communiquer l'estimation de synchronisation (F) à travers le réseau synchrone.

2. Un procédé selon la revendication 1, dans lequel l'estimation de synchronisation (F) comprend l'un quelconque ou plusieurs des paramètres suivants :
un rapport entre le débit de données (f1) et la fréquence de référence (f2);
une différence entre le débit de données (f1) et la fréquence de référence (f2); et
une différence de phase entre un signal d'horloge de données récupéré associé au débit de données (f1), et un signal d'horloge de référence associé à la fréquence de référence (f2).

3. Un procédé selon la revendication 1, dans lequel le débit de données (f1) est représenté par un signal d'horloge multibit de données comprenant des mots multibits séquentiels générés à une fréquence pratiquement égale à un débit binaire du signal de données, une valeur respective de chaque mot multibit étant représentative d'une proportion de bits du signal de données à transporter à travers le réseau de communication synchrone.

4. Un procédé selon la revendication 3, dans lequel l'étape de calcul de l'estimation de synchronisation (F) comprend les étapes consistant à :
calculer une valeur de phase de données d'après l'horloge multibit de données;
calculer une valeur de phase synchrone d'après la fréquence de référence (f2);
comparer la valeur de phase de données et la valeur de phase synchrone à un débit d'échantillonnage prédéterminé, et générer une valeur d'erreur indiquant le résultat de la comparaison; et
calculer l'estimation de synchronisation (F) comme une moyenne temporelle de la valeur d'erreur.

5. Un procédé selon la revendication 4, dans lequel l'étape de calcul d'une valeur de phase de données comprend une étape d'addition d'un nombre prédéterminé de mots successifs de l'horloge multibit de données.

6. Un procédé selon la revendication 4, dans lequel l'étape de calcul de la valeur de phase synchrone comprend les étapes consistant à:
générer un second signal d'horloge multibit comprenant des mots multibits séquentiels générés à une fréquence pratiquement égale à la fréquence de référence (f2), une valeur respective de chaque mot multibit étant représentative d'une proportion de bits du signal synchrone qui sont disponibles pour acheminer des bits du signal de données;
additionner des mots successifs de la seconde horloge multibit; et
intégrer le résultat d'addition.

7. Un procédé selon la revendication 4, dans lequel l'étape de comparaison de la valeur de phase de données et de la valeur de phase synchrone comprend une étape consistant à soustraire la valeur de phase synchrone de la valeur de phase de données.

8. Un procédé selon la revendication 7, dans lequel l'étape de comparaison de la valeur de phase de données et de la valeur de phase synchrone comprend une étape supplémentaire consistant à soustraire une valeur de référence R de la valeur de phase de données.

9. Un procédé selon la revendication 4, dans lequel le débit d'échantillonnage prédéterminé correspond à un débit auquel la valeur de phase de données est recalculée.

10. Un procédé selon la revendication 1, dans lequel l'étape de communication de l'estimation de synchronisation (F) comprend une étape consistant à insérer l'estimation de synchronisation dans le signal synchrone, de façon que l'estimation de synchronisation (F) soit transportée à travers le réseau de communication synchrone.

11. Un procédé selon la revendication 1, dans lequel l'étape d'application de données du signal de données vers le signal synchrone comprend les étapes consistant à :
enregistrer en tampon les données dans une mémoire élastique, conformément à une horloge de données ayant le débit de données (f1);
lire les données dans la mémoire élastique conformément à une horloge de lecture ayant la fréquence de référence (f2);
insérer les données lues dans une enveloppe de charge utile synchrone, appelée ci-après SPE, du signal synchrone, et
insérer des bits de bourrage dans la SPE conformément à l'estimation de synchronisation (F).

12. Un procédé selon la revendication 11, dans lequel les bits de bourrage sont répartis de façon pratiquement uniforme à l'intérieur du tributaire virtuel de la SPE.

13. Un procédé de désynchronisation d'un signal de données transporté dans un réseau de communication synchrone, le procédé comprenant les étapes consistant à :
recevoir une enveloppe de charge utile synchrone, appelée ci-après SPE, du réseau de communication synchrone, la SPE contenant des données du signal de données et une estimation de synchronisation (F) indiquant une relation entre un débit de données (f1) du signal de données et une fréquence de référence (f2) du réseau de communication synchrone; et
effectuer une application inverse des données du signal de données à partir de la SPE, en conformité avec la fréquence de référence (f2); tout en
extrayant des bits de bourrage à partir du signal synchrone en conformité avec l'estimation de synchronisation (F).

14. Un procédé selon la revendication 13, dans lequel l'estimation de synchronisation (F) comprend l'un quelconque ou plusieurs des paramètres suivants :
un rapport entre le débit de données (f1) et la fréquence de référence (f2);
une différence entre le débit de données (f1) et la fréquence de référence (f2); et
une différence de phase entre un signal d'horloge de données récupéré associé au débit de données (f1), et un signal d'horloge de référence associé à la fréquence de référence (f2).

15. Un procédé selon la revendication 13, dans lequel l'étape d'application inverse de données du signal de données à partir de la SPE comprend les étapes consistant à :
élaborer une horloge locale de réception, Rx, ayant une fréquence correspondant à la fréquence de référence (f2) du réseau de communication synchrone;
enregistrer les données en tampon dans une mémoire élastique conformément à l'horloge locale Rx et à l'estimation de synchronisation (F);
élaborer une horloge de données récupérée ayant une fréquence correspondant pratiquement au débit de données (f1), en utilisant l'horloge locale Rx et l'estimation de synchronisation (F);
lire les données dans la mémoire élastique conformément à l'horloge de données recupérée;

16. Un procédé selon la revendication 15, dans lequel l'étape d'enregistrement des données en tampon dans la mémoire élastique comprend les étapes consistant à :
élaborer une horloge d'écriture à trous en utilisant l'horloge locale Rx et l'estimation de synchronisation (F);
utiliser l'horloge locale Rx à trous pour écrire des bits de la SPE dans la mémoire élastique, de façon que des bits de données du signal de données soient écrits dans la mémoire élastique, et que des bits de bourrage soient rejetés.

17. Un procédé selon la revendication 15, dans lequel l'étape d'élaboration d'une horloge de données récupérée comprend les étapes consistant à :
fournir l'horloge locale Rx à une boucle d'asservissement de phase, appelée ci-après PLL, de désynchronseur; et
piloter la PLL de désynchroniseur en utilisant la valeur multibit indiquant l'estimation de synchronisation (F).
